# EUROPEAN PATENT APPLICATION

(11) **EP 0 867 112 A1**
(43) Date of publication of application: **30.09.1998**
(21) Application number: 98105353.1
(22) Date of filing: 25.03.1998
(51) Int. Cl.: A01K 1/015

(54) **Vegetable absorbent material for use as litter in zootechnical field**

(30) Priority: 26.03.1997 IT MI970710
(71) Applicant: Pellegatta, Paolo, 21029 Vergiate (Varese) (IT)
(72) Inventor: Pellegatta, Paolo, 21029 Vergiate (Varese) (IT)
(74) Representative: Gervasi, Gemma, Dr.

(57) **Abstract**

The following description refers to the use of coconut fibre dust for the preparation of absorbent materials suitable for hygienic litter for cats and animals, either pets or breeding cattle.

## Description

### Field of the invention

The present invention refers to the use of coconut fibre dust for the preparation of an absorbent material useful as hygienic litter for cats and other animals, such as pets (e.g. birds, squirrels) or breeding cattle.

The coconut fibre dust used as raw material according to the present invention is also called coco peat, peat from coconut husk pith fraction, coconut husk pith fraction, or coir fibre pith.

Coconut fibre dust is a completely natural, chemically non-pretreated product, and is biologically compatible, free from toxic and harmful substances, not contaminated by microorganisms potentially noxious to animal heath.

In any case, the coconut fibre dust used for the purposes of the present invention has not undergone any drastic thermal treatments, as those required for converting vegetable matter to activated carbon.

Coconut fibre dust consists of minute corpuscles sized from few fractions of millimetre to some millimetres (e.g. from 0.5 to 3 mm), it is reddish-brown ("Manila"), soft, elastic, spongy under compression, and rough to the touch. It is easily compressible as it can be generally reduced until 5 to 8 times its original volume. It generally absorbs a quantity of liquids between 3 and 4 litres water/kg coconut fibre dust (at approximately 20°C to 25°C). Moreover, it is light and easily transportable; when dampened, it has a good smell of underwood. The dust marketed in Europe has a moisture content of 20% by weight of the total material.

Coconut fibre dust is an ecological raw material of low price, abundantly available from the whole equatorial zone, obtainable from substantially inexhaustible reserves, and is ecologically compatible.

At present, coconut fibre dust is marketed as substitute for peat, for soil conditioning and as loam for potted or greenhouse-grown plants.

The product can be marketed only if provided with sanitary and bacteriological certificates attesting that it is not contaminated by microorganisms potentially noxious to the health of man (e.g. salmonella).

### State of the art

Absorbent materials of vegetable origin for animals' litter are already known, which are obtained by lengthy and costly processes and/or from chemically or thermally pretreated vegetable substances, yielding final products that exhibit low biological compatibility and/or raise disposal problems after use: some of said vegetable products are obtained by crushing, under agitation, cellulosic slurry residues from paper making (generally containing large quantities of inorganic matter coming from paper manufacture, such as sulphates, or aqueous suspensions of fibrous vegetable pulps) which are thickened with substances, such as kaolin or TiO₂, granulated and dried [US 4,721,059: Derwent abstract]. Others use partially pyrolyzed cellulosic residues or ground vegetable materials coated with defoamer-added cement suspensions [US 4,311,115: Derwent abstract; US 5,207,830: CAPLUS abstract].

### Summary

The Applicant has now found that it is possible to advantageously overcome the prior art drawbacks by using coconut fibre dust as absorbent material for cat and other animals litter. Therefore, it is an object of the present invention the use of coconut fibre dust for the preparation of absorbent material useful as litter for cats and other animals and the absorbent material containing coconut fibre dust, for the use above indicated.

### Detailed description of the invention

The coconut fibre dust used as raw material according to the present invention is commercially available.

According to typical embodiments of the invention, the present absorbent material either consists of coconut fibre dust alone, in the natural state, without addition of other substances, or is prevailing composed of said dust, in combination with small quantities of other substances exerting an useful action. The absorbent material of the present invention preferably contains coconut fibre dust combined with one or more substances facilitating its workability or having other functions, e.g. selected among one or more lubricating and/or binding additives, one or more microorganisms exerting an useful action (e.g. deodorizers or composting accelerators), and mixtures thereof.

The present absorbent material preferably comprises coconut fibre dust in amount of at least 92% by weight, more preferably 95% by weight, and still more preferably 98% by weight, of the absorbent material total weight, corresponding to overall quantity of added substances (e.g. additives and/or microorganisms) not higher than 8%, 5% or 2% per 100 parts by weight of absorbent material, respectively: therefore, said absorbent material is completely or, in any case essentially natural and biologically compatible.

The present absorbent material possesses good deodorant and odour-absorbent properties (even after a 2 to 3 days' use, it does not give off odours noticeably perceptible to the human sense of smell, even at a distance of few centimetres), is available at low cost being obtained from a cheap raw material and by simple procedures, without chemical or thermal pretreatments meant for improving its absorbent or deodorant properties.

According to typical embodiments of the present invention, it does not contain any activated carbon, which possesses deodorant and decolorant properties.

Furthermore, once the absorbent material of the invention has been used as litter, and after an appropriate maturation time (e.g. approximately 30 days at 25°C for the material added with microorganisms that accelerate composting and approximately 90 days at 25°C to 27°C for the material free from said microorganisms), the user may recycle the present absorbent material as compost to enrich the loam of ornamental plants grown in terraces and gardens.

With a view to making coconut fibre dust less pulverulent, it can be converted to granules or pellets (small balls or small cylinders), preferably sized 4 mm to 15 mm, more preferably 5 to 10 mm, obtained by conventional methods, e.g. known in zootechnical field.

For the purposes of the present invention, coconut fibre dust is preferably mixed with one or more lubricating and/or binding additives, in particular with appropriate clayish substances, such as bentonite and kaolin (preferably bentonite), preferably with about 1 to 8 parts by weight, and more preferably with about 1 to 4 parts by weight (even 1 part by weight of total additives) per 100 parts by weight of coconut fibre dust.

According to a further preferred embodiment of the present invention, coconut fibre dust, preferably added with said lubricant, may be further added with one or more microorganisms (bacteria, yeast, schizomycetes, fungi), selected out of the microorganisms capable of degrading odour-bearing molecules (by way of example, the bacteria degrading NH₃ to nitrates), the microorganisms that accelerate composting (by way of example, lignin-degrading bacteria) and mixtures thereof.

For the purposes of the present invention, the microorganisms used are those already known for the functions mentioned above, being selected e.g. from the natural environment by conventional techniques or genetically modified by known bioengineering methods.

Several microorganisms are found in commerce, e.g. in the powder form, with the microorganism being supported on inert matrices (e.g. supports for freeze-drying, silicates). Preferably, said supported microorganisms are used in amounts of approximately 1 to 2 kg per m³ absorbent material.

Therefore, absorbent materials preferred according to the present invention contain coconut fibre dust, one or more lubricants, preferably bentonite, in the amounts hereinabove reported, at least one microorganism endowed with deodorant activity, and at least one microorganism accelerating composting.

Preferably, coconut fibre dust is converted to granules or pellets, more preferably after being thoroughly mixed with additives and/or supported microorganisms, if any. The substances are preferably mixed and granulated or pelletized in the dry state, i.e. having the same water content as the commercial products, without any further water addition.

Pellets are typically obtained from a mixture including coconut fibre dust, preferably premixed in the dry state with at least one lubricant, then extruded through the holes of a common pelletizer, to give small cylinders which are cut to the desired length.

Some embodiments of the present invention are reported below by way of example and not of limitation.

The absorbent materials A) to H) of the present invention below illustrated consist of coconut fibre dust alone (1), or in combination with one or more components 2), 3) and 4) indicated below:

### Components

1) coconut fibre dust in the natural state;
2) clay or other lubricant-binding agent;
3) deodorant microorganisms;
4) microorganisms accelerating composting.

### Absorbent materials of the invention

A = 1) alone; B = 1) + 2); C = 1) + 3); D = 1) + 2) + 3); E = 1) + 4); F = 1) + 2) + 4); G = 1) + 3) + 4); H = 1) + 2) +3 ) + 4).

### Raw materials

The raw materials used are as commercially available, including commercial coconut fibre dust ("Coco Peat", "Coir Fibre Dust", "Coir Fibre Pith").

### EXAMPLE 1

Coconut Fibre dust (260 kg), kept under agitation in an industrial powder mixer, was added with bentonite (2.5 kg), deodorant bacteria (degrading NH₃ to nitrates) supported on an inert matrix (1 kg), bacteria accelerating composting supported on an inert matrix (lignin degraders) (1 kg).

Once the components had been thoroughly mixed, the mixture was extruded in a pelletizer for industrial use and formed in pellets approximately 5 to 10 mm in size.

## Claims

1. Absorbent material containing coconut fibre dust, suitable for animals' litter.

2. The material as claimed in claim 1, selected between a material consisting of coconut fibre dust in the natural state, alone, without addition of other ingredients and a material prevailingly consisting of coconut fibre dust in combination with one or more additives selected out of lubricants and/or binding agents, microorganisms exerting an useful action, and mixtures thereof.

3. The absorbent material as claimed in any of claims 1 or 2, containing at least 92% by weight coconut fibre dust with respect to the absorbent material total weight.

4. The material as claimed in claim 1, in the form of granules or pellets (small balls or small cylinders) sized 4 mm to 15 mm.

5. The material as claimed in claim 1, including coconut fibre dust in combination with at least one lubricanting and/or binding additive.

6. The material as claimed in claim 5, wherein said additive is bentonite or another clayish material.

7. The material as claimed in any of claims 2, 5 or 6, containing 1 to 8 parts by weight of additive per 100 parts by weight of coconut fibre dust.

8. The material as claimed in claim 7, containing 1 to 4 parts by weight of additive per 100 parts by weight of said coconut fibre dust.

9. The material as claimed in claim 1, wherein coconut fibre dust is added with one or more microorganisms (bacteria, yeast, schisomycetes, fungi), selected out of those capable of degrading odour-bearing molecules, those accelerating composting, and mixtures thereof.

10. The material as claimed in claim 9, wherein the microorganisms are supported on an inert matrix and used in amounts of 1 to 2 kg per m³ absorbent material.

11. The material as claimed in claim 1, containing cocont fibre dust, one or more lubricating additives, at least a deodorant microorganism and at least a microorganism accelerating composting.

12. The material as claimed in claim 1, selected among the compositions from A through H illustrated below, consisting of:
1) coconut fibre dust in the natural state, either alone or in combination with one or more of the following components:
2) clay or other lubricant-binding agent;
3) deodorant microorganisms;
4) microorganisms accelerating composting,
as illustrated below:
A= 1) alone; B = 1) + 2); C = 1) + 3); D = 1) + 2) + 3); E = 1) + 4); F = 1) + 2) + 4); G = 1) + 3) + 4); H = 1) + 2) + 3) + 4).

13. The material as claimed in claim 1, free from activated carbon.

14. Use of coconut fibre dust for the preparation of an absorbent material as defined in claims 1 to 13.

15. A process for the preparation of an absorbent material as defined in any one of claims 1 to 13, including converting coconut fibre dust to granules or pellets, optionally after premixing said dust in the dry state with lubricants and/or binding agents and/or supported microorganisms.

16. The process as claimed in claim 15, wherein pellets are obtained from coconut fibre dust premixed in the dry state with at least one lubricant and extruded through pelletizer holes to give small cylinders, which are cut to the desired length.
